# EUROPÄISCHE PATENTSCHRIFT

(11) **EP 0 751 968 B1**
(45) Veröffentlichungstag und Bekanntmachung des Hinweises auf die Patenterteilung: **18.08.1999**
(21) Anmeldenummer: 95912244.1
(22) Anmeldetag: 11.03.1995
(51) Int. Cl.: C08F 271/00, B01F 17/00, C09B 67/00, C11D 3/37, D21H 17/34, C09K 17/20, C05G 3/00

(54) **N-VINYLEINHEITEN ENTHALTENDE PFROPFPOLYMERISATE, VERFAHREN ZU IHRER HERSTELLUNG UND IHRE VERWENDUNG**
GRAFT POLYMERS CONTAINING N-VINYL UNITS, PROCESS FOR THEIR PRODUCTION AND THEIR USE
POLYMERES GREFFES CONTENANT DES UNITES N-VINYLE, LEURS PROCEDES DE PREPARATION ET LEUR UTILISATION

(30) Priorität: 23.03.1994 DE 4409903
(43) Veröffentlichungstag der Anmeldung: 08.01.1997
(73) Patentinhaber: BASF AKTIENGESELLSCHAFT, 67056 Ludwigshafen (DE)
(72) Erfinder: HARTMANN, Heinrich, D-67117 Limburgerhof (DE); DENZINGER, Walter, D-67346 Speyer (DE); NILZ, Claudia, D-67127 Rödersheim-Gronau (DE)
(86) Internationale Anmeldenummer: EP9500912
(87) Internationale Veröffentlichungsnummer: WO9525759

(56) Entgegenhaltungen:
- BE-A- 667 414
- DE-A- 2 711 458
- GB-A- 1 157 063
- GB-A- 1 226 609
- US-A- 2 735 830
- US-A- 3 249 571

## Beschreibung

Die Erfindung betrifft N-Vinyleinheiten enthaltende Pfropfpolymerisate, die monoethylenisch ungesättigte Monomere auf Vinylamin- und/oder offenkettige N-Vinylamideinheiten enthaltende Polymerisate aufgepfropft enthalten, Verfahren zu ihrer Herstellung und ihre Verwendung als Dispergiermittel, als Zusatz zu Wasch- und Reinigungsmitteln, als Verfestigungsmittel für Papier und als Mittel für die Bodenverfestigung.

Aus der EP-B-0 071 050 sind lineare, basische Polymerisate bekannt, die Vinylamin- und Vinylformamideinheiten einpolymerisiert enthalten. Diese Polymerisate werden durch Homopolymerisation von N-Vinylformamid und anschließende partielle Abspaltung von Formylgruppen durch Einwirkung von Säuren oder Basen hergestellt und als Mittel zur Entwässerungsbeschleunigung und zur Erhöhung der Retention bei der Herstellung von Papier verwendet.

Copolymerisate aus N-Vinylcarbonsäureamiden und anderen monoethylenisch ungesättigten Verbindungen wie Acrylsäure, Acrylsäureestern, Vinylacetat, N-Vinylpyrrolidon oder Acrylnitril sind ebenfalls in der Literatur beschrieben wie auch die daraus durch Einwirkung von Säuren oder Basen erhältlichen modifizierten Copolymerisate, bei denen die Carbonamidgruppen ganz oder teilweise aus den einpolymerisierten N-Vinylcarbonsäureamiden eliminiert sein können und bei denen die einpolymerisierten Comonomeren gegebenenfalls hydrolysiert sind, vgl. EP-B-0 216 387, EP-B-0 251 182, EP-A-0 528 409, WO-A-82/02073, JP-A-84/033 312, JP-A-84/039 399, EP-A-0 337 310 und DE-A-4 322 854.

Partiell oder vollständig hydrolysierte Copolymerisate des N-Vinylformamids werden beispielsweise als Trocken- und Naßverfestiger bei der Herstellung von Papier, als Fixiermittel, und als Promoter für die Diketenleimung verwendet.

Aufgabe der Erfindung ist es, neue Stoffe zur Verfügung zustellen.

Die Aufgabe wird erfindungsgemäß gelöst mit N-Vinyleinheiten enthaltenden Pfropfpolymerisaten, bei denen die Pfropfgrundlage ein Polymerisat ist, das jeweils mindestens 5 Gew.-% Einheiten der Formeln 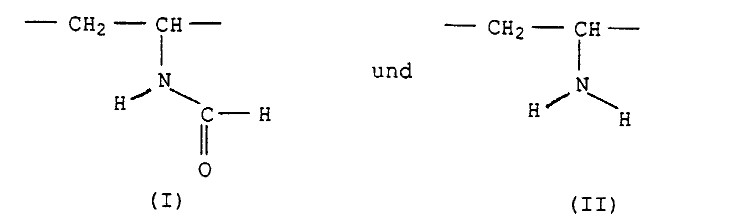 enthält, daß auf die Pfropfgrundlage monoethylenisch ungesättigte Monomere im Gewichtsverhältnis 100 : 1 bis 1 : 100 aufgepfropft sind und daß die Pfropfpolymerisate K-Werte von mindestens 7 (bestimmt nach H. Fikentscher in 5 gew.-%iger wäßriger Lösung bei 25°C und pH 7) haben.

Die N-Vinyleinheiten enthaltenden Pfropfpolymerisate werden dadurch hergestellt, daß man monoethylenisch ungesättigte Monomere in Gegenwart von Polymerisaten, die jeweils mindestens 5 Gew.-% Einheiten der Formeln I und II enthalten, als Pfropfgrundlage im Gewichtsverhältnis 100 : 1 bis 1 : 100 radikalisch polymerisiert.

Die so erhältlichen Pfropfpolymerisate werden als Dispergiermittel für Pigmente, als Zusatz zu Wasch- und Reinigungsmitteln, als Verfestigungsmittel für Papier, als Mittel für die Bodenverfestigung und zur Düngemittelkompaktierung verwendet.

Als Pfropfgrundlage dienen Polymerisate, die mindestens 5 Gew.-% an Einheiten der Formel 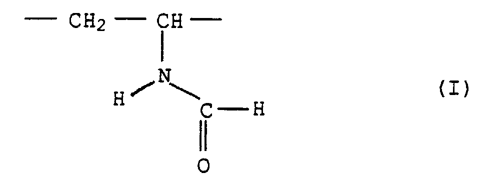 und Einheiten der Formel 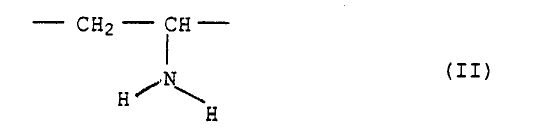 enthalten, wobei R² dieselbe Bedeutung hat wie in Formel I.

Den Einheiten der Formel I liegt N-Vinylformamid als Monomer zugrunde.

N-Vinylformamid kann zur Herstellung von Polymerisaten allein oder zusammen mit anderen copolymerisierbaren Monomeren eingesetzt werden. Verfahren zur Herstellung solcher Copolymerisate sind bekannt, vgl. die oben genannten Literaturstellen.

Als andere copolymerisierbare Monomere eigenen sich beispielsweise monoethylenisch ungesättigte Carbonsäuren mit 3 bis 8 C-Atomen wie Acrylsäure, Methacrylsäure, Dimethacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure. Aus dieser Gruppe von Monomeren verwendet man vorzugsweise Acrylsäure, Methacrylsäure, Maleinsäure oder Mischungen der genannten Carbonsäuren, insbesondere Mischungen aus Acrylsäure und Maleinsäure oder Mischungen aus Acrylsäure und Methacrylsäure. Die monoethylenisch ungesättigten Carbonsäuren können in Form der freien Säure und - soweit vorhanden - der Anhydride oder in partiell oder in vollständig neutralisierter Form bei der Copolymerisation eingesetzt werden. Um diese Monomeren zu neutralisieren, verwendet man vorzugsweise Alkalimetall- oder Erdalkalimetallbasen, Ammoniak oder Amine, z.B. Natronlauge, Kalilauge, Soda, Pottasche, Natriumhydrogencarbonat, Magnesiumoxid, Calciumhydroxid, Calciumoxid, gasförmiges oder wäßriges Ammoniak, Triethylamin, Ethanolamin, Diethanolamin, Triethanolamin, Morpholin, Diethylentriamin oder Tetraethylenpentamin.

Weitere geeignete Comonomere sind beispielsweise die Ester, Amide und Nitrile der oben angegebenen Carbonsäuren, z.B. Acrylsäuremethylester, Acrylsäureethylester, Methacrylsäuremethylester, Methacrylsäureethylester, Hydroxyethylacrylat, Hydroxypropylacrylat, Hydroxybutylacrylat, Hydroxyethylmethacrylat, Hydroxypropylmethacrylat, Hydroxyisobutylacrylat, Hydroxyisobutylmethacrylat, Maleinsäuremonomethylester, Maleinsäuredimethylester, Maleinsäuremonoethylester, Maleinsäurediethylester, 2-Ethylhexylacrylat, 2-Ethylhexylmethacrylat, Acrylamid, Methacrylamid, N-Dimethylacrylamid, N-tertiär-butylacrylamid, Acrylnitril, Methacrylnitril, Dimethylaminoethylacrylat, Dimethylaminoethylmethacrylat, Diethylaminoethylacrylat, Diethylaminoethylmethacrylat sowie die Salze der zuletzt genannten Monomeren mit Carbonsäuren oder Mineralsäuren sowie die quaternierten Produkte.

Außerdem eignen sich als andere copolymerisierbare Monomere Acrylamidoglykolsäure, Vinylsulfonsäure, Allylsulfonsäure, Methallylsulfonsäure, Styrolsulfonsäure, Acrylsäure-(3-sulfopropyl)-ester, Methacrylsäure-(3-sulfopropyl)ester und Acrylamidomethylpropansulfonsäure sowie Phosphonsäuregruppen enthaltende Monomere, wie Vinylphosponsäure, Allylphosphonsäure und Acrylamidomethanpropanphosphonsäure.

Weitere geeignete copolymerisierbare Verbindungen sind N-Vinylpyrrolidon, N-Vinylcaprolactam, N-Vinylimidazol, N-Vinyl-2-methylimidazol, N-Vinyl-4-methylimidazol, Diallylammoniumchlorid, Vinylacetat und Vinylpropionat. Es ist selbstverständlich auch möglich, Mischungen der genannten Monomeren einzusetzen.

Die Copolymeren enthalten mindestens 5, meistens mindestens 20 und bevorzugt mindestens 50 Gew.-% N-Vinylamide einpolymerisiert.

Die Herstellung der Copolymerisate erfolgt nach bekannten Verfahren, z.B. der Lösungs-, Fällungs-, Suspensions- oder Emulsionspolymerisation unter Verwendung von Verbindungen, die unter den Polymerisationsbedingungen Radikale bilden. Die Polymerisationstemperaturen liegen üblicherweise in dem Bereich von 30 bis 200, vorzugsweise 40 bis 110°C. Geeignete Initiatoren sind beispielsweise Azo-, und Peroxyverbindungen sowie die üblichen Redoxinitiatorsysteme, wie Kombinationen aus Wasserstoffperoxyd und reduzierend wirkenden Verbindungen, z.B. Natriumsulfit, Natriumbisulfit, Natriumformaldehydsulfoxilat und Hydrazin. Diese Systeme können gegebenenfalls zusätzlich noch geringe Mengen eines Schwermetallsalzes enthalten.

Die Homo- und Copolymeren besitzen K-Werte von mindestens 7, vorzugsweise 10 bis 250. Die Polymeren können jedoch K-Werte bis zu 300 haben. Die K-Werte werden bestimmt nach H. Fikentscher, Cellulose-Chemie, Band 13, 58 bis 64 und 71 bis 74 (1932) in wäßriger Lösung bei 25°C, bei Konzentrationen, die je nach K-Wert-Bereich zwischen 0,1 % und 5 % liegen, vgl. unten.

Aus den oben beschriebenen Copolymerisaten erhält man durch teilweise Abspaltung der Formylgruppen aus dem in das Polymerisat einpolymerisierten N-Vinylamiden unter Bildung von Amin- bzw. Ammoniumgruppen die erfindungsgemäß als Pfropfgrundlage zu verwendenden hydrolysierten Copolymerisate; die Einheiten der Formeln I und II aufweisen:

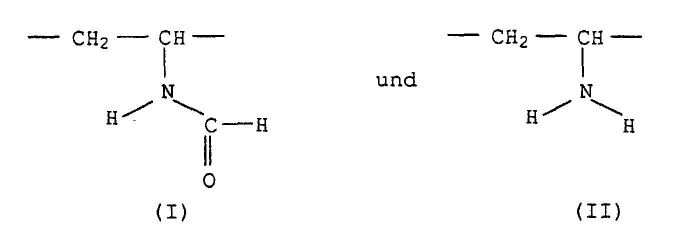

In Abhängigkeit von den bei der Hydrolyse gewählten Reaktionsbedingungen erhält man entweder eine partielle oder vollständige Hydrolyse der Einheiten I. Die Hydrolyse wird beispielsweise so weit geführt, daß 5 bis 95 % des in das Polymerisat einpolymerisierten N-Vinylformamids hydrolysiert sind. Bei der Hydrolyse von Vinylformamid-Einheiten enthaltenden Polymerisaten kann der Hydrolysegrad beispielsweise durch Polyelektrolyttitration oder durch enzymatische Analyse der freigesetzten Ameisensäure bestimmt werden. Bevorzugt verwendet man als Pfropfgrundlage Copolymerisate aus N-Vinylformamid und Vinylacetat, Acrylsäure, Methacrylsäure, Acrylamid oder Acrylnitril. Wenn Copolymerisate der N-Vinylamide als Pfropfgrundlage eingesetzt werden, so können auch die einpolymerisierten Comonomeren je nach gewählter Hydrolysebedingung chemisch verändert werden, z.B. entstehen aus Vinylacetat-Einheiten Vinylalkohol-Einheiten, aus Acrylsäuremethylester-Einheiten, Acrylsäure-Einheiten und aus Acrylnitril-Einheiten, Acrylamid- bzw. Acrylsäure-Einheiten.

Als Hydrolysemittel eignen sich vor allem Mineralsäuren, wie Halogenwasserstoffe, die gasförmig oder in wäßriger Lösung eingesetzt werden können. Vorzugsweise verwendet man Salzsäure, Schwefelsäure, Salpetersäure und Phosphorsäure sowie organische Säuren, wie C₁- bis C₅-Carbonsäuren und aliphatische oder aromatische Sulfonsäuren. Der pH-Wert bei der sauren Hydrolyse beträgt 1 bis 5,vorzugsweise 0 bis 2. Pro Formylgruppenäquivalent, das aus den einpolymerisierten Einheiten I abgespalten werden soll, benötigt man 0,05 bis 2, vorzugsweise 1 bis 1,5 Moläquivalente einer Säure.

Die Hydrolyse der einpolymerisierten Einheiten der Struktur I kann auch mit Hilfe von Basen vorgenommen werden, z.B von Metallhydroxyden, insbesondere von Alkalimetall- und Erdalkalimetallhydroxyden. Vorzugsweise verwendet man Natriumhydroxyd oder Kaliumhydroxyd. Die Hydrolyse kann gegebenenfalls auch in Gegenwart von Ammoniak oder Aminen durchgeführt werden.

Die oben beschriebenen Polymerisate, die Einheiten der Formel I und II enthalten, werden der Pfropfung mit monoethylenisch ungesättigten Monomeren unterzogen. Die Vinylamineinheiten können in freier Form als Amine oder auch als deren Salze zur Pfropfung vorliegen.

Zur Pfropfung können alle ethylenisch ungesättigte Monomere Verwendung finden, deren Polymerisation durch die Amingruppen in freier oder in Salzform nicht inhibiert wird. Beispielsweise sind geeignet monoethylenisch ungesättigte Mono- und Dicarbonsäuren, deren Salze und Ester mit C₁ bis C₃₀-Alkoholen, deren substituierte Ester, deren Amide, N-Alkylamiden und Nitrilen. Geeignet sind auch N-Vinyllactame, N-Vinylimidazole und N-Vinylamide. Weiterhin sulfogruppenhaltige und phosphonogruppenhaltige Monomere. Beispielsweise kommen in Frage Acrylsäure, Methacrylsäure, Dimethylacrylsäure, Ethacrylsäure, Crotonsäure, Vinylessigsäure, Allylessigsäure, Maleinsäure, Fumarsäure, Citraconsäure, Mesaconsäure, Methylenmalonsäure und Itaconsäure, Acrylsäuremethylester, Acrylsäureethylester, Methacrylsäuremethylester, Methacrylsäureethylester, Hydroxyethylacrylat, Hydroxypropylacrylat, Hydroxybutylacrylat, Hydroxyethylmethacrylat, Hydroxypropylmethacrylat, Hydroxyisobutylacrylat, Hydroxyisobutylmethacrylat, Maleinsäuremonomethylester, Maleinsäuredimethylester, Maleinsäuremonoethylester, Maleinsäurediethylester, 2-Ethylhexylacrylat, 2-Ethylhexylmethacrylat, Acrylamid, Methacrylamid, N-Dimethylacrylamid, N-tertiär-Butylacrylamid, Acrylnitril, Methacrylnitril, Dimethylaminoethylacrylat, Dimethylaminoethylmethacylat, Diethylaminoethylacrylat, Diethylaminoethylmethacrylat sowie die Salze der zuletzt genannten Monomeren mit Carbonsäuren oder Mineralsäuren sowie die quaternierten Produkte. Außerdem eignen sich als Monomere Acrylamidoglykolsäure, Vinylsulfonsäure, Allylsulfonsäure, Methallylsulfonsäure, Styrolsulfonsäure, Acrylsäure-(3-sulfopropyl)ester, Methacrylsäure-(3-sulfopropyl)ester und Acrylamido-methylpropansulfonsäure sowie Phosphonsäuregruppen enthaltende Monomere, wie Vinylphosphonsäure, Allylphosphonsäure und Acrylamidomethanpropanphosphonsäure.

Weitere geeignete Verbindungen sind N-Vinylimidazol, N-Vinylpyrrolidon, N-Vinylcaprolactam, N-Vinyl-2-methylimidazol, N-Vinyl-4-methylimidazol, Diallylammoniumchlorid, Vinylacetat und Vinylpropionat, N-Vinylformamid, N-Vinyl-N-methylformamid, N-Vinylacetamid, N-Vinyl-N-methylacetamid, N-Vinyl-N-ethylacetamid, N-Vinylpropionamid und N-Vinyl-N-methylpropionamid.

Es ist selbstverständlich auch möglich, Mischungen der genannten Monomeren einzusetzen, z.B. Mischungen aus Acrylester und Vinylacetat, Mischungen aus verschiedenen Acrylestern, Mischungen aus Acrylestern und Acrylamid oder Mischungen aus Acrylamid und Hydroxyethylacrylat.

Die Carbonsäuren, Sulfosäuren und Phosphonsäuren können in freier Form oder in partiell oder vollständig neutralisierter Form bei der Pfropfpolymerisation eingesetzt werden. Zur Neutralisation der monoethylenisch ungesättigten Carbonsäuren verwendet man beispielsweise Alkalimetall-, Erdalkalimetallbasen, Ammoniak oder Amine, z.B. Natronlauge, Kalilauge, Soda, Pottasche, Natriumhydrogencarbonat, Magnesiumoxid, Calciumhydroxid, Calciumoxid, Ammoniak, Triethylamin, Morpholin, Diethylentriamin oder Tetraethylenpentamin.

Bevorzugt werden N-Vinylpyrrolidon, N-Vinylcaprolactam, N-Vinylimidazol, Acrylsäure, Methacrylsäure, Acrylamid, Acrylnitril und Vinylacetat auf die Pfropfgrundlage aufgepfropft.

Zur Herstellung der Pfropfcopolymerisate werden die Monomeren in Gegenwart der Pfropfgrundlage radikalisch polymerisiert. In einigen Fällen kann es für die Wirkung des entstehenden Pfropfpolymerisates günstig sein, zwei oder mehrere Polymerisate einzusetzen, die Einheiten der Formel I und II enthalten, z.B. Mischungen aus hydrolysierten Homopolymerisaten des N-Vinylformamids und hydrolysierten Copolymerisaten von N-Vinylformamid und Vinylacetat.

Die Pfropfpolymerisation kann in Gegenwart oder auch in Abwesenheit von inerten Lösemitteln oder inerten Verdünnungsmitteln durchgeführt werden. Da die Polymerisation in Abwesenheit von inerten Löse- oder Verdünnungsmitteln meistens zu uneinheitlichen Pfropfcopolymerisaten führt, ist die Pfropfcopolymerisation in einem inerten Löse- oder Verdünnungsmittel bevorzugt. Geeignet sind beispielsweise solche inerten Verdünnungsmittel, in denen die als Pfropfgrundlage eingesetzten Polymerisate suspendiert werden können und die die Monomeren lösen. In diesen Fällen liegen die Pfropfcopolymerisate nach der Copolymerisation in suspendierter Form vor und können leicht durch Filtration in fester Form isoliert werden. Geeignete inerte Verdünnungsmittel sind beispielsweise Toluol, o-, m-, p-Xylol und Isomerengemische, Ethylbenzol, aliphatische Kohlenwasserstoffe, wie Pentan, Hexan, Heptan, Octan, Nonan, Dodecan, Cyclohexan, Cyclooctan, Methylcyclohexan sowie Mischungen der genannten Kohlenwasserstoffe oder Benzinfraktionen, die keine polymerisierbaren Monomeren enthalten. Außerdem eignen sich Chlorkohlenwasserstoffe wie Chloroform, Tetrachlorkohlenstoff, Hexachlorethan, Dichlorethan und Tetrachlorethan. Bei der oben beschriebenen Arbeitsweise, bei der die als Pfropfgrundlage eingesetzten Polymerisate in einem inerten Verdünnungsmittel suspendiert sind, setzt man vorzugsweise wasserfreie Polymere ein und verwendet aus der Gruppe Dicarbonsäuren vorzugsweise die Anhydride. Eine bevorzugte Art der Herstellung der Pfropfcopolymerisate ist die Lösungspolymerisation, wobei die als Pfropfgrundlage eingesetzten Polymerisate, die Monomeren und das gebildete Pfropfcopolymerisat zumindest dispergiert, vorzugsweise in gelöster Form vorliegen. Für die Lösungspolymerisation eignen sich beispielsweise inerte Lösemittel, wie Methanol, Ethanol, Isopropanol, n-Propanol, n-Butanol, sek.-Butanol, Tetrahydrofuran, Dioxan, sowie Mischungen der genannten inerten Lösemittel. Bevorzugt ist die Lösungspolymerisation in Wasser oder in Mischungen aus Wasser und Alkoholen. Die Pfropfcopolymerisation kann kontinuierlich oder diskontinuierlich durchgeführt werden.

Die Pfropfcopolymerisate werden im allgemeinen unter Mitverwendung von radikalbildenden Initiatoren hergestellt. Als radikalbildende Initiatoren sind vorzugsweise alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens zwei bei verschiedenen Temperaturen zerfallenden Initiatoren zu arbeiten, nämlich zunächst einen bereits bei niedrigerer Temperatur zerfallenden Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche Initiatoren oder Mischungen von wasserlöslichen und wasserunlöslichen Initiatoren einsetzen. Die in Wasser unlöslichen Initiatoren sind dann in der organischen Phase löslich. Für die im folgenden angegebenen Temperaturbereiche kann man beispielsweise die dafür aufgeführten Initiatoren verwenden.

### Temperatur: 30 bis 60°C:

Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis-(4-methoxy-2,4-dimethylvaleronitril), 2,2'-Azobis-(2-methyl-N-phenylpropionamidin)dihydrochlorid, 2,2'-Azobis-(2-methylpropionamidin)dihydrochlorid.

### Temperatur: 60 bis 80°C:

tert.-Butylperpivalat, Dioctanoylperoxid, Dilauroylperoxid, 2,2'-Azobis-(2,4-dimethylvaleronitril).

### Temperatur: 80 bis 100°C:

Dibenzoylperoxid, tert.-Butylper-2-ethylhexanoat, tert.-Butylpermaleinat, 2,2'-Azobis-(isobutyronitril), Dimethyl-2,2'-azobisisobutyrat, Natriumpersulfat, Kaliumpersulfat, Ammoniumpersulfat.

### Temperatur: 100 bis 120°C:

Bis-(tert.-butylperoxid)-cyclohexan, tert-.Butylperoxiisopropylcarbonat, tert.-Butylperacetat, Wasserstoffperoxid.

### Temperatur: 120 bis 140°C:

2,2-Bis-(tert.-butylperoxi)-butan, Dicumylperoxid, Di-tert.-amylperoxid, Di-tert.-butylperoxid.

### Temperatur: > 140°C:

p-Menthanhydroperoxid, Pinanhydroperoxid, Cumolhydroperoxid und tert.-Butylhydroperoxid.

Verwendet man zusätzlich zu den genannten Initiatoren noch Salze oder Komplexe von Schwermetallen, z.B. Kupfer-, Kobalt-, Mangan-, Eisen-, Vanadium-, Nickel- und Chromsalze oder organische Verbindungen, wie Benzoin, Dimethylanilin oder Ascorbinsäure, so können die Halbwertszeiten der angegebenen radikalbildenden Initiatoren verringert werden. So kann man beispielsweise tert.-Butylhydroperoxid unter Zusatz von 5 ppm Kupfer-II-acetylacetonat bereits so aktivieren, daß bereits bei 100°C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden. Bezogen auf die bei der Polymerisation eingesetzten Monomeren verwendet man 0,01 bis 20, vorzugsweise 0,05 bis 10 Gew.-% eines Polymerisationsinitiators oder einer Mischung mehrerer Polymerisationsinitiatoren. Als Redoxkomponenten setzt man 0,01 bis 15 % der reduzierend wirkenden Verbindungen zu. Schwermetalle werden im Bereich von 0,1 bis 100 ppm, vorzugsweise 0,5 bis 10 ppm eingesetzt. Oft ist es von Vorteil, eine Kombination aus Peroxid, Reduktionsmittel und Schwermetall als Redoxkatalysator einzusetzen.

Die Copolymerisation der Monomeren in Gegenwart der Polymeren mit Einheiten der Formeln I und II kann auch durch Einwirkung von ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Photoinitiatoren bzw. Sensibilisatoren ein. Hierbei handelt es sich beispielsweise um Verbindungen wie Benzoin und Benzoinether, α-Methylbenzoin oder α-Phenylbenzoin. Auch sogenannte Triplett-Sensibilisatoren, wie Benzildiketale, können verwendet werden. Als UV-Strahlungsquellen dienen beispielsweise neben energiereichen UV-Lampen, wie Kohlenbogenlampen, Quecksilberdampflampen oder Xenonlampen auch UV-arme Lichtquellen, wie Leuchtstoffröhren mit hohem Blauanteil.

Um Pfropfpolymerisate mit niedrigem K-Wert herzustellen, wird die Pfropfcopolymerisation zweckmäßigerweise in Gegenwart von Reglern durchgeführt. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allyl-alkohol, Aldehyde, wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon 0,05 bis 20 Gew.-%, bezogen auf die bei der Polymerisation eingesetzten Monomeren.

Üblicherweise wird die Pfropfpolymerisation bei Temperaturen von 20 bis 200°C durchgeführt, wobei man gegebenenfalls unter erhöhtem Druck arbeitet. Der bevorzugte Temperaturbereich liegt jedoch bei 30 bis 120°C.

Wenn die Reaktionen in Lösung durchgeführt werden, wählt man zweckmäßigerweise Konzentrationen zwischen 5 und 80 Gew.-%. Der bevorzugte Konzentrationsbereich liegt bei 10 bis 60 Gew.-%. Manchmal kann es vorteilhaft sein, die Monomeren auf die unhydrolysierten Polymeren zu pfropfen, d.h. die Polymeren enthalten in diesem Fall nur die Einheiten der Formel I neben Einheiten der gegebenenfalls noch einpolymerisierten anderen Monomeren. Nach der Pfropfpolymerisation kann man im Bedarfsfall die Einheiten der Formel I vollständig oder partiell hydrolysieren. Die Bedingungen für die Pfropfpolymerisation und für die Hydrolyse entsprechen den schon beschriebenen Methoden.

Die Pfropfpolymerisate besitzen K-Werte von mindestens 7, bestimmt nach H. Fikentscher in 5 gew.-%iger wäßriger Lösung bei 25°C und pH 7. Die K-Werte der Pfropfpolymerisate liegen vorzugsweise in dem Bereich von 10 bis 200, können jedoch bis zu 300 betragen. In der Regel werden K-Werte im Bereich von 7 bis 20 an 5 %igen wäßrigen Lösungen, von 20 bis 100 an 1 %igen wäßrigen Lösungen, von 100 - 200 an 0,5 %igen wäßrigen Lösungen und > 200 an 0,1 %igen wäßrigen Lösungen gemessen.

Die Pfropfpolymeren werden beispielsweise als Dispergiermittel für Pigmente, als Zusatz zu Wasch- und Reinigungsmitteln, als Verfestigungsmittel für Papier und als Mittel für die Bodenverfestigung und zur Düngemittelkompaktierung verwendet.

### Beispiele

### Herstellung der Pfropfgrundlagen

### Pfropfgrundlage A

In einem Reaktor werden 500 g Wasser, 6,8 g 75 %ige Phosphorsäure und 4,2 g 50 %ige wäßrige Natronlauge vorgelegt. Der pH-Wert beträgt 6,3. Nun wird im schwachen Stickstoffstrom auf 70°C erhitzt und innerhalb von 3 Stunden 638 g N-Vinylformamid und eine Lösung von 12,5 g 2-Mercaptoethanol in 30 g Wasser und innerhalb von 4 Stunden eine Lösung von 3,13 g 2,2'-Azobis(2-methylpropionamidin)dihydrochlorid in 95 g Wasser bei 70°C gleichmäßig zudosiert. Die gelbe, klare Lösung besitzt einen Feststoffgehalt von 50,9 %. Der K-Wert des Polymeren liegt bei 31,7. Nun werden bei 70°C 383 g Chlorwasserstoff eingegast und 5 Stunden bei 70°C erhitzt bis 95 % der Formamidstrukturen in Aminstrukturen hydrolysiert sind. Nun wird mit 3000 g Wasser verdünnt und anschließend durch Ultrafiltration das Natriumchlorid und Natriumformiat entfernt. Anschließend wird die stark alkalische Lösung in einem Rotavapor unter Vakuum auf einen Polymergehalt von 42,5 % aufkonzentriert.

### Pfropfgrundlage B

In einem Reaktor werden 750 g Wasser und 1,5 g primäres Natriumphosphat im schwachen Stickstoffstrom auf 68°C erhitzt und innerhalb von 4 Stunden 150 g N-Vinylformamid und innerhalb von 6 Stunden eine Lösung von 0,45 g 2,2'-Azobis(2-methylpropionamidin)dihydrochlorid in 100 g Wasser bei 68°C gleichmäßig zudosiert. Anschließend wird noch 2 Stunden bei 70°C nacherhitzt. Die wäßrige Lösung besitzt einen Polymergehalt von 15 %. Der K-Wert des Polymeren beträgt 88 (gemessen 1 %ig in Wasser). Nun wird in die 70°C heiße Polymerisatlösung 93 g Chlorwasserstoff eingeleitet, innerhalb von etwa 30 Minuten und dann noch 5 Stunden bei 70°C nacherhitzt bis über 95 % der Formamidgruppen in Vinylamingruppen hydrolysiert sind. Anschließend wird abgekühlt und der pH-Wert der Lösung mit 50 %iger Natriumlauge auf 4,5 eingestellt. Der Polyvinylamingehalt beträgt 11,3 %, das in Form des Hydrochlorids vorliegt.

### Beispiel 1

In einem gerührten Reaktor mit Stickstoffzuführung, Rückflußkühler und Dosiervorrichtungen werden 400 g der 42,5 %igen Lösung von Pfropfgrundlage A, 80 g Wasser und 59 g Essigsäure im schwachen Stickstoffstrom auf 85°C erhitzt. Die Lösung hat einen pH-Wert von 8,5. Bei 85°C werden nun innerhalb von 3 Stunden eine Mischung von 180 g N-Vinylpyrrolidon und 40 g Wasser und innerhalb von 4 Stunden eine Lösung von 1,8 g 2,2'-Azobis(2-methylpropionamidin)dihydrochlorid in 50 g Wasser gleichmäßig zudosiert. Anschließend wird noch 2 Stunden bei 85°C nacherhitzt. Während des Abkühlens wird mit 250 g Wasser verdünnt. Die klare gelbe viskose Lösung besitzt einen Feststoffgehalt von 34,9 % und einen pH-Wert von 9,0. Der K-Wert des Polymeren, gemessen 1 %ig in Wasser, beträgt 62.

### Beispiel 2

In einem Reaktor gemäß Beispiel 1 werden 265,5 g der 42,5 %igen Lösung von Pfropfgrundlage A, 214,5 g Wasser und 180 g N-Vinylimidazol auf 100°C zum schwachen Sieden erhitzt. Nun wird bei 100°C innerhalb von 6 Stunden eine Lösung von 3,6 g 2,2'-Azobis(2-methylpropionamidin)dihydrochlorid in 90 g Wasser zudosiert. Anschließend wird noch 1 Stunden bei 100°C nacherhitzt, mit 750 g Wasser verdünnt und abgekühlt. Die hellbraune, klare Lösung besitzt einen Feststoffgehalt von 20 % und einen pH-Wert von 10,6. Der K-Wert des Polymeren, gemessen 1 %ig in Wasser, ist 44.

### Beispiel 3

Beispiel 2 wird mit den Ausnahmen wiederholt, daß man die Vorlage mit 70 g Essigsäure auf einen pH-Wert von 7,5 einstellt und am Ende mit 250 g Wasser verdünnt. Die braune, klare Lösung besitzt einen Feststoffgehalt von 32,6 % und einen pH-Wert von 8,0. Der K-Wert des Polymeren, gemessen 1 %ig in Wasser, beträgt 66.

### Beispiel 4

In einem Reaktor gemäß Beispiel 1 werden 331,8 g der 42,5 %igen Lösung von Pfropfgrundlage A und 257,3 g Wasser im schwachen Stickstoffstrom auf 85°C erhitzt. Nun werden innerhalb von 3 Stunden eine Mischung aus 225 g Methacrylsäure, 167 g Wasser und 184 g 50 %ige Natronlauge, wobei die Natronlauge bei maximal 30°C langsam zur Methacrylsäurelösung zudosiert wird, und eine Lösung von von 2,25 g 2,2'-Azobis (2-methylpropionamidin)dihydrochlorid in 83 g Wasser gleichmäßig zudosiert. Anschließend wird noch 1 Stunden bei 85°C nacherhitzt. Nach dem Abkühlen liegt das Polymere als 34,2 %ige hellbraune, leicht trübe Lösung mit einem pH-Wert von 11,0 vor. Der K-Wert des Polymeren beträgt 68, gemessen 1 %ig in Wasser.

### Beispiel 5

In einem Reaktor gemäß Beispiel 1 werden 265,5 g der 42,5 eigen Lösung von Pfropfgrundlage A und 324,5 g Wasser im schwachen Stickstoffstrom auf 85°C erhitzt. Nun werden innerhalb von 3 Stunden 360 g der 50 %igen Lösung von Acrylamid und innerhalb von 4 Stunden eine Lösung von 1,8 g 2,2'-Azobis(2-methylpropionamidin)dihydrochlorid in 50 g Wasser gleichmäßig zudosiert. Das Reaktionsgemisch wird noch 2 Stunden bei 85°C auspolymerisiert und anschließend abgekühlt. Die klare, braune, viskose Lösung besitzt einen Feststoffgehalt von 30 % und einen pH-Wert von 10,4. Der K-Wert des Polymeren beträgt 27 (gemessen 1 %ig in Wasser).

### Beispiel 6

Beispiel 5 wird mit der Ausnahme wiederholt, daß man die Vorlage mit 81 g Essigsäure auf einen pH-Wert von 6,7 einstellt. Die klare braune viskose Lösung besitzt einen Feststoffgehalt von 35,6 % und einen pH-Wert von 6,6. Der K-Wert des Polymeren beträgt 53.

### Beispiel 7

In einem Reaktor gemäß Beispiel 1 werden 331,8 g der 42,5 %igen Lösung von Pfropfgrundlage A und 257,3 g Wasser im schwachen Stickstoffstrom auf 85°C erhitzt. Nun werden innerhalb von 3 Stunden gleichmäßig eine Lösung von 225 g Acrylsäure, 267 g Wasser und 250 g 50 %iger Natronlauge (max. Neutralisationstemperatur 30°C) und eine Lösung von 2,25 g 2,2'-Azobis(2-methylpropionamidin)dihydrochlorid in 83 g Wasser zudosiert. Anschließend wird das Reaktionsgemisch noch 1 Stunde bei 85°C nacherhitzt. Die braune, leicht trübe Lösung hat einen pH-Wert von 11,5 und einen Feststoffgehalt von 32,1 %. Der K-Wert des Polymeren beträgt 88.

### Beispiel 8

In einem Reaktor gemäß Beispiel 1 werden 548 g Wasser, 0,145 g Natriumhexametaphosphat 0,05 g der 40 %igen wäßrigen Lösung des Pentanatriumsalzes der Diethylentriaminpentaessigsäure, 56,5 g der 42,5 %igen Lösung der Pfropfgrundlage A, 15 g Essigsäure und 112 g einer 50 %igen wäßrigen Acrylamidlösung im schwachen Stickstoffstrom auf 50°C erhitzt. Nun werden sofort, nach 1 und 3 Stunden jeweils eine Lösung von 0,017 g 2,2'-Azobis(2-methylpropionamidin)hydrochlorid in 13,34 g Wasser zugegeben. Jeweils nach 2 weiteren Stunden wird eine Lösung von 0,084 g 2,2'-Azobis-(2-methylpropionamidin)dihydrochlorid in 13,34 g Wasser zugesetzt und noch weiteren 2 Stunden bei 75°C nacherhitzt. Die gelbe, klare Lösung besitzt einen Feststoffgehalt von 11,5 % und einen pH-Wert von 6,8. Der K-Wert des Polymeren beträgt 78 (gemessen 1 %ig in Wasser).

### Beispiel 9

Beispiel 8 wird mit der Ausnahme wiederholt, daß anstelle von 15 g Essigsäure 40 g 32 %ige Salzsäure werden, wobei der pH-Wert anfangs 4,3 beträgt.

Die gelbe klare Polymerisatlösung besitzt einen Feststoffgehalt von 11,5 % und einen pH-Wert von 4,8. Der K-Wert des Polymeren beträgt 86 (gemessen %ig in Wasser).

### Beispiel 10

In einem Reaktor gemäß Beispiel 1 werden 437,3 g Wasser, 0,145 g Natriumhexametaphosphat, 0,04 g der 40 %igen Lösung des Pentanatriumsalzes der Diethylentriaminpentaessigsäure, 141,6 g der 11,3 %igen Lösung der Pfropfgrundlage B, 128 g einer 50 %igen wäßrigen Acrylamidlösung und 5 g Essigsäure vorgelegt. Der pH-Wert der Mischung beträgt 4,5. Die Vorlage wird dann im schwachen Stickstoffstrom auf 50°C erhitzt. Sobald die Temperatur von 50°C erreicht ist, sowie nach jeweils 2 Stunden fügt man eine Lösung von 0,019 g 2,2'-Azobis(2-methylpropionamidin)dihydrochlorid zu. Danach wird noch 2 Stunden bei 75°C nacherhitzt. Die gelbliche klare Lösung besitzt einen Feststoffgehalt von 13,9 % und einen pH-Wert von 4,6. Der K-Wert des Polymeren beträgt 84 (gemessen 1 %ig in Wasser).

## Patentansprüche

1. N-Vinyleinheiten enthaltende Pfropfpolymerisate, dadurch gekennzeichnet, daß die Pfropfgundlage ein Polymerisat ist, das jeweils mindestens 5 Gew.-% Einheiten der Formeln 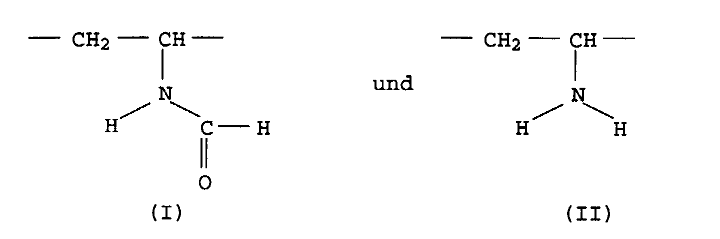 enthält, daß auf die Pfropfgrundlage monoethylenisch ungesättigte Monomere im Gewichtsverhältnis 100 : 1 bis 1 : 100 aufgepfropft sind und daß die Pfropfpolymerisate K-Werte von mindestens 7 (bestimmt nach H. Fikentscher in 5 gew.-%iger wäßriger Lösung bei 25°C und pH 7) haben.

2. Verfahren zur Herstellung von N-Vinyleinheiten enthaltenden Polymerisaten nach Anspruch 1, dadurch gekennzeichnet, daß man monoethylenisch ungesättigte Monomere in Gegenwart von Polymerisaten, die jeweils mindestens 5 Gew.-% Einheiten der Formeln I und II enthalten, als Pfropfgrundlage im Gewichtsverhältnis 100 : 1 bis 1 : 100 radikalisch polymerisiert.

3. Verfahren nach Anspruch 2, dadurch gekennzeichnet, daß die Pfropfgrundlage mindestens 20 Gew.-% Einheiten der Formeln I und II enthält.

4. Verfahren nach Anspruch 2, dadurch gekennzeichnet, daß die Pfropfgrundlage 5 bis 70 Gew.-% Einheiten der Formel I und 30 bis 95 Gew.-% Einheiten der Formel II enthält.

5. Verfahren nach Anspruch 2, dadurch gekennzeichnet, daß die Pfropfgrundlage 5 bis 40 Gew.-% Einheiten der Formel I und 60 bis 95 Gew.-% Einheiten der Formel II enthält.

6. Verfahren nach einem der Ansprüche 2 bis 4, dadurch gekennzeichnet, daß die Pfropfgrundlage ein Copolymerisat aus N-Vinylformamid und Vinylacetat, Acrylsäure, Methacrylsäure, Acrylamid oder Acrylnitril ist.

7. Verfahren nach einem der Ansprüche 2 bis 6, dadurch gekennzeichnet, daß auf die Pfropfgrundlage monoethylenisch ungesättigte Monomere aus der Gruppe N-Vinylpyrrolidon, N-Vinylcaprolactam, N-Vinylimidazol, Acrylsäure, Methacrylsäure, Acrylamid, Acrylnitril und Vinylacetat aufgepfropft werden.

8. Verwendung der Pfropfpolymerisate nach Anspruch 1 als Dispergiermittel für Pigmente, als Zusatz zu Wasch- und Reinigungsmitteln, als Verfestigungsmittel für Papier und als Mittel für die Bodenverfestigung und zur Düngemittelkompaktierung.

## Claims

1. A graft polymer containing N-vinyl units, wherein the grafting base is a polymer which contains in each case at least 5 % by weight of units of the formulae 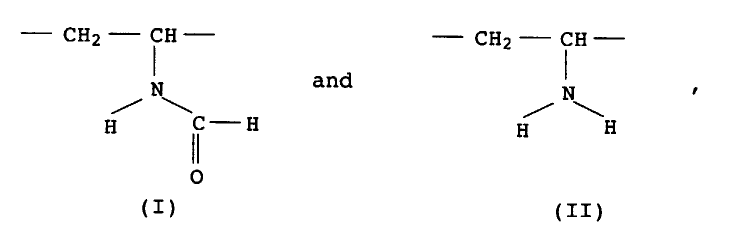 monoethylenically unsaturated monomers are grafted in a weight ratio of from 100:1 to 1:100 onto the grafting base and the graft polymer has a K value of at least 7 (determined according to H. Fikentscher in 5 % strength by weight aqueous solution at 25°C and pH 7).

2. A process for the preparation of a polymer containing N-vinyl units, as claimed in claim 1, wherein monoethylenically unsaturated monomers are subjected to free radical polymerization in the presence of a polymer which contains in each case at least 5 % by weight of units of the formulae I and II, as the grafting base, in a weight ratio of from 100:1 to 1:100.

3. A process as claimed in claim 2, wherein the grafting base contains at least 20 % by weight of units of the formulae I and II.

4. A process as claimed in claim 2, wherein the grafting base contains from 5 to 70 % by weight of units of the formula I and from 30 to 95 % by weight of units of the formula II.

5. A process as claimed in claim 2, wherein the grafting base contains from 5 to 40 % by weight of units of the formula I and from 60 to 95 % by weight of units of the formula II.

6. A process as claimed in any of claims 2 to 4, wherein the grafting base is a copolymer of N-vinylformamide and vinyl acetate, acrylic acid, methacrylic acid, acrylamide or acrylonitrile.

7. A process as claimed in any of claims 2 to 6, wherein monoethylenically unsaturated monomers selected from the group consisting of N-vinylpyrrolidone, N-vinylcaprolactam, N-vinylimidazole, acrylic acid, methacrylic acid, acrylamide, acrylonitrile and vinyl acetate are grafted onto the grafting base.

8. The use of a graft polymer as claimed in claim 1 as a dispersant for pigments, as an additive for detergents and cleaning agents, as a strength agent for paper and as a soil stabilizer and for fertilizer compaction.

## Revendications

1. Polymères greffés contenant des motifs N-vinyle, caractérisés en ce que la base de greffage est un polymère contenant à chaque fois au moins 5% en poids de motifs de formules 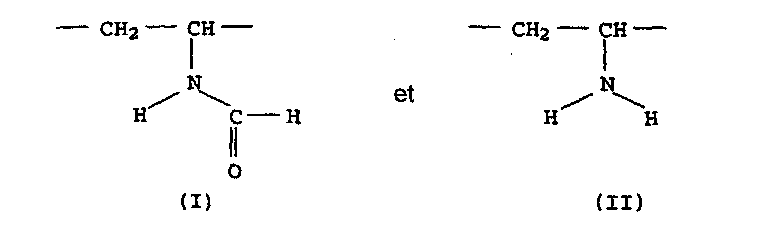 et en ce que des monomères à insaturation monoéthylénique sont greffés sur la base de greffage dans un rapport en poids de 100:1 à 1:100 et en ce que les polymères greffés ont une valeur de K d'au moins 7 (déterminée selon H. Fikentscher dans une solution aqueuse à 5% en poids à 25°C et à pH 7).

2. Procédé de préparation de polymères greffés contenant des motifs N-vinyle selon la revendication 1, caractérisé en ce que l'on polymérise de façon radicalaire des monomères à insaturation monoéthylénique en présence de polymères, qui contiennent à chaque fois au moins 5% en poids de motifs de formules I et II, en tant que base de greffage dans un rapport en poids de 100:1 à 1:100.

3. Procédé selon la revendication 2, caractérisé en ce que la base de greffage contient au moins 20% en poids de motifs de formule I et II.

4. Procédé selon la revendication 2, caractérisé en ce que la base de greffage contient 5-70% en poids de motifs de formule I et 30-95% en poids de motifs de formule II.

5. Procédé selon la revendication 2, caractérisé en ce que la base de greffage contient 5-40% en poids de motifs de formule I et 60-95% en poids de motifs de formule II.

6. Procédé selon l'une quelconque des revendications 2 à 4, caractérisé en ce que la base de greffage est un copolymère à base de N-vinylformamide et d'acétate de vinyle, d'acide acrylique, d'acide méthacrylique, d'acrylamide ou d'acrylonitrile.

7. Procédé selon l'une quelconque des revendications 2 à 6, caractérisé en ce qu'on greffe sur la base de greffage des monomères à insaturation monoéthylénique choisis dans le groupe formé par la N-vinylpyrrolidone, le N-vinylcaprolactame, le N-vinylimidazole, l'acide acrylique, l'acide méthacrylique, l'acrylamide, l'acrylonitrile et l'acétate de vinyle.

8. Utilisation de polymères greffés selon la revendication 1, en tant que dispersants pour des pigments, en tant qu'additifs pour des agents de lavage et de nettoyage, en tant qu'agent de renfort pour le papier et en tant qu'agent pour le compactage des sols et pour le compactage d'engrais.
